# EUROPÄISCHE PATENTANMELDUNG

(11) **EP 3 915 757 A1**
(43) Veröffentlichungstag der Anmeldung: **01.12.2021**
(21) Anmeldenummer: 21176273.7
(22) Anmeldetag: 27.05.2021
(51) Int. Cl.: B29C 48/10, B29C 48/25, B29C 48/375, B29C 48/38, B29C 48/385, B29C 48/40, B29C 48/44, B29C 48/685, B29C 48/80

(54) **BLASFOLIENANLAGE AUFWEISEND EIN PLASTIFIZIERUNGS- UND/ODER KONDITIONIERUNGSMITTEL UMFASSEND EINE ZENTRALWELLE UND ZUMINDEST EINE PLANETWALZE, HERSTELLVERFAHREN, FOLIENBAHN UND UMRÜSTVERFAHREN**

(30) Priorität: 28.05.2020 DE 102020114392
(71) Anmelder: Entex Rust & Mitschke GmbH, 44805 Bochum (DE)
(72) Erfinder: Rust, Harald, 44805 Bochum (DE); Edgar Gandelheidt, Edgar, 67551 Worms (DE)
(74) Vertreter: FARAGO Patentanwälte

(57) **Zusammenfassung**

Die Erfindung betrifft eine Blasfolienanlage aufweisend ein Plastifizierungs- und/oder Konditionierungsmittel (22) umfassend eine Zentralwelle (38) und zumindest eine Planetwalze (40), ein Herstellverfahren, eine Folienbahn und ein Umrüstverfahren.

Das Plastifizierungs- und/oder Konditionierungsmittel erlaubt es, dass die Temperatur des designierten Schmelzestroms in der Ringschlitzdüse der Blasfolienanlage eine gegenüber dem bei bekannten Blasfolienanlagen niedrigeren Wert annehmen kann, wodurch die Produktionskapazität der Blasfolienanlage signifikant gesteigert werden kann.

## Beschreibung

Die Erfindung betrifft eine Blasfolienanlage aufweisend ein Plastifizierungs- und/oder Konditionierungsmittel umfassend eine Zentralwelle und zumindest eine Planetwalze, ein Herstellverfahren, eine Folienbahn und ein Umrüstverfahren.

In einer Blasfolienanlage wird zunächst ein Ausgangsmaterial zu einem Schmelzestrom plastifiziert. Der Schmelzestrom wird von einer Ringschlitzdüse zu einem Folienschlauch ausgeformt, welcher im erstarrten Zustand zunächst zu einer doppelt flachgelegten Folienbahn flachgelegt und schließlich zu einem Folienwickel aufgewickelt wird.

Der von einer Blasfolienanlage verarbeitete thermoplastische Kunststoff wird in einem schmelzflüssigen Aggregatzustand aus der Ringschlitzdüse herausgepresst und ändert seinen Aggregatzustand im Bereich der Folienblase der Blasfolienanlage, sodass er als bereits doppelt flachgelegte Folienbahn in einem überwiegend festen Aggregatzustand oder in einem festen Aggregatzustand mittels einem Abzug der Blasfolienanlage von der Ringschlitzdüse abgezogen werden kann.

In dem unteren Bereich der Folienblase ist der thermoplastische Kunststoff in Folge seiner vergleichsweise hohen Temperatur beim Austritt aus der Ringschlitzdüse noch in einem flüssigen Aggregatzustand und zusätzlich erst geringfügig vernetzt, weshalb er eine vergleichsweise geringe Viskosität aufweist.

Durch die im Bereich der Blase fortschreitende Vernetzung und die sinkende Temperatur steigt die Viskosität des thermoplastischen Kunststoffs in Maschinenrichtung der Blasfolienanlage an.

Beim Abziehen des schmelzflüssigen thermoplastischen Kunststoffs in Form der Folienblase von der Ringschlitzdüse ist es wesentlich zu vermeiden, dass die Folienblase aufplatzt.

Es ist bekannt, dass die Folienblase mit steigender Abzugsgeschwindigkeit bei ansonsten gleichen Einstellgrößen der Blasfolienanlage zunehmend dazu neigt aufzuplatzen.

Als Konsequenz daraus sind die Abzugsgeschwindigkeit der Folienblase von der Ringschlitzdüse und damit auch die Produktionskapazität einer Blasfolienanlage beschränkt.

Der Erfindung liegt die Aufgabe zugrunde, dem Stand der Technik eine Verbesserung oder eine Alternative zur Verfügung zu stellen.

Nach einem ersten Aspekt löst die Aufgabe eine Blasfolienanlage zur Herstellung einer Folienbahn aus thermoplastischem Kunststoff, wobei die Blasfolienanlage in Maschinenrichtung einen Extruder, einen Blaskopf mit einer Ringschlitzdüse zum Austreten eines Folienschlauchs, eine Flachlegung zum Überführen des Folienschlauchs in die Folienbahn, einen Abzug und einen Wickler aufweist, wobei die Blasfolienanlage ein Plastifizierungs- und/oder Konditionierungsmittel umfassend eine Zentralwelle und zumindest eine Planetwalze aufweist.

### Begrifflich sei hierzu Folgendes erläutert:

Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein...", "mindestens zwei ..." usw., sofern sich nicht aus dem jeweiligen Kontext ausdrücklich ergibt oder es für den Fachmann offensichtlich oder technisch zwingend ist, dass dort nur "genau ein ...", "genau zwei ..." usw. gemeint sein können.

Im Rahmen der hier vorliegenden Patentanmeldung sei der Ausdruck "insbesondere" immer so zu verstehen, dass mit diesem Ausdruck ein optionales, bevorzugtes Merkmal eingeleitet wird. Der Ausdruck ist nicht als "und zwar" und nicht als "nämlich" zu verstehen.

Als "Blasfolienanlage" wird eine Anlage bezeichnet, welche zumindest einen Extruder, einen Blaskopf mit einer Ringschlitzdüse, eine Flachlegung, einen Abzug und einen Wickler aufweist, wobei die vorgenannten Komponenten in einem funktionalen Zusammenhang zueinander stehen und wobei die Blasfolienanlage zur Herstellung einer Blasfolie eingerichtet ist.

Eine "Folienbahn" kann entweder eine einlagige Folienbahn sein, oder eine schlauchförmige Folienbahn, wobei der Schlauch aufgetrennt oder schlauchförmig belassen werden kann. Weiterhin kann vorzugsweise auch ein zusammengelegter Schlauch als Folienbahn bezeichnet werden, insbesondere als doppelt flachgelegte Folienbahn. Die Folienbahn kann vorzugsweise einschichtig oder mehrschichtig sein. Besonders bevorzugt ist eine Folienbahn kontinuierlich und kann auf einem Wickel aufgewickelt gelagert werden.

Eine schlauchförmige Folienbahn wird auch als "Folienschlauch" bezeichnet.

Unter einem "Kunststoff" wird ein Material verstanden, welches Makromoleküle aufweist, welche in Molekülketten organisiert sein können. Insbesondere weist ein Kunststoff Polymere auf.

Wichtige Merkmale von Kunststoff sind die technischen Eigenschaften, insbesondere Formbarkeit, Härte, Elastizität, Bruchfestigkeit, Temperatur-, Wärmeformbeständigkeit und chemische Beständigkeit, die sich durch die Wahl der Makromoleküle, Herstellungsverfahren und durch Beimischung von Additiven variieren lassen. Kunststoffe werden bezüglich ihrer physikalischen Eigenschaften in drei großen Gruppen unterteilt: Thermoplaste, Duroplaste und Elastomere.

Ein "Thermoplast" oder ein "thermoplastischer Kunststoff ist ein Kunststoff, der durch Energiezufuhr weich und formbar wird und schließlich schmilzt. Somit weist ein Thermoplast in einem bestimmten Temperaturbereich die Eigenschaft auf, dass er sich verformen lässt. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt.

Unter einer "Maschinenrichtung" wird die Richtung des designierten Stoffstroms oder designierten Materialstroms, insbesondere des Stoffstroms aufweisend den thermoplastischen Kunststoff, auf seinem Weg durch die Blasfolienanlage verstanden. Dabei ist die Maschinenrichtung nicht als globale Richtung zu verstehen, sondern kann sich vorzugsweise auf dem Weg des designierten Stoffstroms durch die Blasfolienanlage entsprechend der designierten Verwendung der Blasfolienanlage anpassen.

Vorzugsweise beginnt die Maschinenrichtung mit dem designierten Eintritt des Ausgangsmaterials in den Extruder der Blasfolienanlage und endet mit dem Abtransport eines designiert hergestellten Folienwickels von der Blasfolienanlage.

Unter einem "Extruder" wird eine Plastifiziermaschine verstanden, welche in einer Mehrzahl unterschiedlicher Anwendungsgebiete, insbesondere in der kunststoffverarbeitenden Industrie eingesetzt wird.

Vorzugsweise wird unter einem Extruder eine Plastifiziermaschine verstanden, welche Kunststoffe fördert, aufschmilzt und homogenisiert, um den erzeugten Schmelzestrom anschließend zum Ausformen eines Produkts bereitstellen zu können, insbesondere für die Herstellung von Blasfolie.

Unter einem Extruder werden insbesondere Einschneckenextruder, Mehrschneckenextruder und/oder Planetwalzenextruder verstanden, wobei ein Einschneckenextruder eine Extruderschnecke, ein Mehrschneckenextruder mehrere Extruderschnecken und ein Planetwalzenextruder eine Zentralwelle und zumindest eine Planetwalze aufweist.

Unter einer "Extruderschnecke" wird ein überwiegend schneckenförmiges Bauteil oder eine überwiegend schneckenförmige Baugruppe verstanden, welche in Kombination mit weiteren Bauteilen eines Extruders zum Fördern, Aufschmelzen und Homogenisieren von Kunststoff im Inneren eines Extruders eingerichtet ist.

Als "Blaskopf" wird das Werkzeug einer Blasfolienanlage zum Formen eines Folienschlauchs aus dem designierten Schmelzestrom bezeichnet, wobei der Schmelzestrom den Blaskopf mittels einer Ringschlitzdüse verlässt.

Eine "Ringschlitzdüse" ist eine ringförmige Schlitzdüse zur Beeinflussung des designierten Schmelzestroms beim Übertritt in den freien Raum.

Eine "Flachlegung" ist eine Vorrichtung, die dazu eingerichtet ist, einen Folienschlauch in einer zumindest überwiegend geordneten Art und Weise zu einer doppelt flachgelegten Folienbahn zusammenzulegen.

Unter einem "Abzug" wird in Maschinenrichtung der Blasfolienanlage das erste auf die Flachlegung folgende angetriebene Walzenpaar verstanden. Dieses angetriebene Walzenpaar ist dazu eingerichtet, den Folienschlauch der Blasfolienanlage von der Ringschlitzdüse des Blaskopfs abzuziehen. Insbesondere ist der Abzug dazu eingerichtet, den designierten Materialstrom zwischen der Ringschlitzdüse des Blaskopfs und dem Abzug zu bewegen.

Ein "Wickler" einer Blasfolienanlage ist eine Baugruppe der Blasfolienanlage, an welcher die doppelt flachgelegte Folienbahn oder die Folienbahn zu einem Wickel aufgewickelt wird.

Unter einem "Plastifizierungs- und/oder Konditionierungsmittel" wird jegliches Mittel verstanden, welches zum Plastifizieren und/oder Konditionieren eines designierten Materialstroms in einer Blasfolienanlage eingerichtet ist.

Ein Plastifizierungs- und/oder Konditionierungsmittel weist insbesondere eine Zentralwelle und zumindest eine Planetwalze auf. Vorzugsweise weist ein Plastifizierungs- und/oder Konditionierungsmittel eine Mehrzahl von Planetwalzen auf.

Vorzugsweise ist ein Plastifizierungs- und/oder Konditionierungsmittel dazu eingerichtet, ein Ausgangsmaterial, insbesondere in Form eines granulierten Ausgangsmaterials, zu plastifizieren, zu fördern und zu homogenisieren. Hierzu kann ein Plastifizierungs- und/oder Konditionierungsmittel eine separate Einzugsschnecke aufweisen, mittels welcher das Ausgangsmaterial in das Plastifizierungs- und/oder Konditionierungsmittel eingebracht werden kann. Vorzugsweise beginnt die Zentralwelle und die zumindest eine Planetenwalze in Maschinenrichtung hinter der Einzugsschnecke.

Wird das Ausgangsmaterial mit dem Plastifizierungs- und/oder Konditionierungsmittel auch plastifiziert, so benötigt die Blasfolienanlage keinen separaten Extruder mehr, wobei unter anderem auch denkbar ist, dass die Blasfolienanlage eine Mehrzahl von parallelen Plastifizierungssträngen aufweist und nicht jeder Plastifizierungsstrang ein Plastifizierungs- und/oder Konditionierungsmittel verfügt, sodass nur die Plastifizierungsstränge auf einen weiteren Extruder verzichten können, welche ein Plastifizierungs- und/oder Konditionierungsmittel aufweisen.

Weiterhin vorzugsweise ist ein Plastifizierungs- und/oder Konditionierungsmittel dazu eingerichtet, einen designierten Schmelzestrom zu homogenisieren und zu fördern, wobei das Plastifizierungs- und/oder Konditionierungsmittel nicht zum plastifizieren des Ausgangsmaterials eingerichtet ist. Gemäß dieser Variante benötigt die Blasfolienanlage in Maschinenrichtung vor dem Plastifizierungs- und/oder Konditionierungsmittel einen separaten Extruder zur Plastifizierung des Ausgangsmaterials, insbesondere einen weiteren Einschnecken- oder Doppelschneckenextruder.

Ebenfalls vorzugsweise ist ein Plastifizierungs- und/oder Konditionierungsmittel dazu eingerichtet, einen designierten Schmelzestrom zu homogenisieren, wobei der designierte Schmelzestrom nicht von dem Plastifizierungs- und/oder Konditionierungsmittel plastifiziert und gefördert wird. Auch in dieser Variante benötigt die Blasfolienanlage in Maschinenrichtung vor dem Plastifizierungs- und/oder Konditionierungsmittel einen separaten Extruder.

Besonders bevorzugt ist das Plastifizierungs- und/oder Konditionierungsmittel gleichzeitig der Extruder der Blasfolienanlage, wobei das Plastifizierungs- und/oder Konditionierungsmittel in diesem Fall auch zum Plastifizieren des designierten Schmelzestroms eingerichtet ist. Vorteilhaft kann so der herkömmliche Extruder gegen das Plastifizierungs- und/oder Konditionierungsmittel ausgetauscht werden.

Vorzugsweise weist das Plastifizierungs- und/oder Konditionierungsmittel einen Antrieb auf, welcher einen Leistungseintrag in den designierten Schmelzestrom ermöglicht.

Alternativ kann das Plastifizierungs- und/oder Konditionierungsmittel auch freigängig gelagert sein, keinen Antrieb aufweisen und durch den in Maschinenrichtung vorab bereitgestellten Schmelzestrom angetrieben werden oder mitgeschleppt werden.

Unter einer "Zentralwelle" wird eine zentral innerhalb einem Plastifizierungs- und/oder Konditionierungsmittel gelagerte Welle verstanden, welche dazu eingerichtet ist, dass eine oder mehrere Planetwalzen auf der Zentralwelle abwälzen können und sich dabei designiert auf einer Umlaufbahn um die Zentralwelle bewegen. Weiterhin ist eine Zentralwelle innerhalb einem Plastifizierungs- und/oder Konditionierungsmittel dazu eingerichtet, von einem Materialstrom umströmt zu werden, insbesondere je nach Aggregatzustand von einem zumeist festen und granulierten Ausgangsmaterial und/oder einem Schmelzestrom umströmt zu werden.

Unter einer "Planetwalze" wird eine Achse verstanden, welche dazu eingerichtet ist, in einem Wirkzusammenhang mit der Zentralwelle auf einer Kreisbahn um die Zentralwelle umzulaufen. Vorzugsweise rotiert eine Planetwalze gegenläufig bei ihrem designierten Umlauf um die Zentralwelle.

Vorzugsweise ist eine Planetwalze mehrteilig ausgeführt. Dabei kann sie unter anderem mehrere sich in axialer Richtung erstreckende Segmente aufweisen, wobei die Segmente nicht zwangsläufig miteinander verbunden sein müssen, aber miteinander verbunden sein können.

Im Stand der Technik sind Blasfolienanlagen bekannt, bei denen ein Ausgangsmaterial von zumindest einem Extruder aufgeschmolzen und an den Blaskopf zum Ausformen eines Folienschlauchs weitergeleitet wird. Vorzugsweise stellt der zumindest eine Extruder dabei zusätzlich auch den Schmelzedruck bereit, welcher benötigt wird, um den zuvor plastifizierten Schmelzestrom aus der Ringschlitzdüse des Blaskopfs herausströmen zu lassen. Damit wird der Folienschlauch von der Ringschlitzdüse aus dem unter Schmelzedruck stehenden Schmelzstrom ausgeformt. Beispielsweise beträgt der Schmelzedruck 400bar.

Die Abzugsgeschwindigkeit der Folienblase und damit auch die theoretisch erreichbare Produktionsmenge einer Blasfolienanlage sind dadurch begrenzt, dass die Folienblase bei einer zu hohen Abzugsgeschwindigkeit aufplatzt, was es zu verhindern gilt, da die Folienblase im Anschluss an ein Aufplatzen abreißt und der Blasfolienprozess erneut gestartet werden muss.

Völlig unerwartet wurde hier nun in Versuchen herausgefunden, dass man die Abzugsgeschwindigkeit einer Blasfolienanlage und damit die Produktionskapazität einer Blasfolienanlage erhöhen kann, wenn gleichzeitig die Temperatur des aus der Ringschlitzdüse austretenden Schmelzestroms reduziert werden kann.

Dabei kann die Temperatur des Schmelzestroms in der Ringschlitzdüse mittels einer Steuerung mittels stetigem Vergleich zwischen der Messgröße Temperatur und einer Vorgabe für die Temperatur des Schmelzestroms durch eine Reduzierung eines Energieeintrags in den Schmelzestrom im Plastifizierungs- und/oder Konditionierungsmittel so abgesenkt werden, um eine höhere Produktionskapazität der Blasfolienanlage zu erreichen.

Insbesondere wurde hier herausgefunden, dass die Produktionskapazität einer Blasfolienanlage um mehr als 20 % erhöht werden kann, wenn die Temperatur des Schmelzestroms an der Ringschlitzdüse niedriger ist, bevorzugt kann die Produktionskapazität um mehr als 50 % gesteigert werden und besonders bevorzugt kann die Produktionskapazität einer Blasfolienanlage sogar um mehr als 100 % gesteigert werden, wenn der Schmelzestrom mit einer geeigneten und gegenüber dem Stand der Technik abgesenkten Schmelzetemperatur an der Ringschlitzdüse austritt.

Ausdrücklich sei darauf hingewiesen, dass die vorstehenden Werte für die Steigerung der Produktionskapazität als auf Versuchen basierte Anhaltspunkte zu verstehen sind, die einen Anhalt für die Größe des erzielbaren technischen Effekts liefern sollen.

Es wurde weiterhin herausgefunden, dass eine Folienblase aufplatzt, wenn eine Vergleichsspannung, die an einem Element des thermoplastischen Kunststoffs im Bereich der Folienblase wirkt, einen entsprechenden Grenzwert überschreitet.

Die Vergleichsspannung kann mittels der Gestaltänderungsenergiehypothese aus den Komponenten der an dem Element des thermoplastischen Kunststoffs im Bereich der Folienblase wirkenden Normalspannungen und Schubspannungen berechnet werden.

Insbesondere konnte herausgefunden werden, dass die Folienblase, insbesondere bei dünnwandigen Folienblasen, aufplatzt, wenn eine Schubspannung, die an einem Element des thermoplastischen Kunststoffs im Bereich der Folienblase wirkt, einen entsprechenden Grenzwert überschreitet.

Dieser Grenzwert hängt, wie nun überraschend herausgefunden wurde, von einer Mehrzahl von Einstellgrößen, insbesondere der Dicke der produzierten Folienbahn und/oder der Materialzusammensetzung der produzierten Folienbahn, sowie von anlagenspezifischen Faktoren, insbesondere dem Durchmesser der Ringschlitzdüse, und von der Temperatur des aus der Ringschlitzdüse austretenden Schmelzestroms ab.

Weiterhin wurde herausgefunden, dass die Viskosität des aus der Ringschlitzdüse austretenden Schmelzestroms abnimmt, wenn die Temperatur des Schmelzestroms an der Ringschlitzdüse gesenkt wird.

Sinkt die Viskosität des Schmelzestroms, welcher aus der Ringschlitzdüse austritt, so kann - wie hier völlig unerwartet herausgefunden wurde - die auf das Element des thermoplastischen Kunststoffs im Bereich der Folienblase wirkende Schergeschwindigkeit und damit die Abzugsgeschwindigkeit der Folienblase sowie die Produktionskapazität der Blasfolienanlage vorteilhaft ansteigen.

Bislang war die Temperatur des Schmelzestroms an der Ringschlitzdüse im stationären Blasfolienprozess im Wesentlichen dadurch bedingt, welche Energiemenge von dem zumindest einen Extruder in den designierten Materialstrom der Blasfolienanlage eingebracht werden musste, um den Materialstrom in der aktuellen Produktionsgeschwindigkeit der Blasfolienanlage bereitzustellen und damit entsprechend zu plastifizieren und zu homogenisieren.

Im Stand der Technik sind Schmelzekühler bekannt, wobei der Schmelzestrom an einem Wärmetauscher ohne bewegte Mischteile entlanggeführt wird. Bekannte Schmelzekühler führen oftmals wegen einer zu geringen Durchmischung in dem Schmelzestrom zu eingefrorenen Randschichten. Diese werden von dem Schmelzestrom von Zeit zu Zeit weitergefördert und führen so zu einem inhomogenen Schmelzestrom, sodass bisher bekannte Schmelzekühler für Blasfolienanlagen nur bedingt einsetzbar sind.

Bezugnehmend auf den im Stand der Technik praktizierten Blasfolienextrusionsprozess ist bekannt, dass die Temperaturen des Schmelzestroms an der Ringschlitzdüse zur Erreichung eines energetischen Optimums für den stationären Betrieb der Blasfolienanlage mit Temperaturen des Schmelzestroms eingestellt wird, welche höher sind als dies technisch notwendig wäre, insbesondere bei der Verarbeitung von Polymeren, welche in diesem Temperaturbereich unempfindlich sind. Die höhere Temperatur führt zu einer höheren Viskosität des Schmelzestroms innerhalb der Blasfolienanlage bis zur Ringschlitzdüse, wobei in Folge der hohen Viskosität der Energieaufwand für die Förderung des Schmelzestroms innerhalb der Blasfolienanlage bis zur Ringschlitzdüse reduziert werden kann, sodass trotz der höheren energetischen Aufwendungen für die höhere Temperatur des designierten Schmelzestroms insgesamt Energie eingespart werden kann. Zur Erreichung der höheren Viskosität ist es im Stand der Technik unter anderem bekannt, dass der Extruder mit einer vergleichsweise kleinen Extruderaustrittsdüse betrieben wird, wodurch der Energieeintrag in den designierten Schmelzestrom innerhalb des Extruders auf einfache Art und Weise erhöht werden kann.

Hier wird nun abweichend eine Blasfolienanlage vorgeschlagen, welche ein Plastifizierungs- und/oder Konditionierungsmittel umfassend eine Zentralwelle und zumindest eine Planetwalze aufweist.

Bevorzugt wird ein Plastifizierungs- und/oder Konditionierungsmittel umfassend eine Zentralwelle und zwei Planetwalzen vorgeschlagen.

Besonders bevorzugt wird ein Plastifizierungs- und/oder Konditionierungsmittel umfassend eine Zentralwelle und drei Planetwalzen vorgeschlagen. Zweckmäßig wird ein Plastifizierungs- und/oder Konditionierungsmittel umfassend eine Zentralwelle und mehr als drei Planetwalzen vorgeschlagen, insbesondere mit einer ungeraden Anzahl von Planetwalzen.

Durch die Kinematik der zumindest einen um die Zentralwelle umlaufenden und in gegengesetzter Richtung zur Zentralwelle designiert rotierenden Planetwalze wird ein Teil des designierten Stoffstroms in dem Plastifizierungs- und/oder Konditionierungsmittel zwischen die Zentralwelle und die zumindest eine Planetwalze eingezogen und zwischen der Zentralwelle und der zumindest einen Planetwalze analog einem Schmelzestrom zwischen zwei Walzen behandelt, insbesondere geknetet und durchmischt.

Ein anderer Teil des designierten Stoffstroms wird zumindest mittelbar wegen der bereits oberhalb beschriebenen Kinematik des Plastifizierungs- und/oder Konditionierungsmittels vor dem Spalt zwischen Zentralwelle und der zumindest einen Planetwalze aufgestaut und so durch die um die Zentralwelle umlaufende zumindest eine Planetwalze vor der Planetwalze umlaufend gefördert, wodurch unter anderem eine Homogenisierung des Schmelzestroms vorangetrieben wird.

Die Kinematik des hier vorgeschlagenen Plastifizierungs- und/oder Konditionierungsmittels führt weiterhin zu einem entsprechenden Spalt zwischen einem Gehäuse für das Plastifizierungs- und/oder Konditionierungsmittel und der zumindest einen Planetwalze, sodass die Misch- und/oder Förderwirkung, wie vorstehend erläutert, auch von diesem weiteren Spalte vorteilhaft gefördert wird.

Es versteht sich, dass die Kinematik zwischen Zentralwelle und Planetwalze auch bei einer Mehrzahl von Planetwalzen bestehen bleibt, wobei dann die Anzahl der Spalte in dem Plastifizierungs- und/oder Konditionierungsmittel mit der Anzahl der Planetwalzen entsprechend ansteigt, sodass insbesondere die Homogenisierung des designierten Schmelzestroms mit einer zunehmenden Anzahl von Planetenwalzen innerhalb des hier vorgeschlagenen Plastifizierungs- und/oder Konditionierungsmittels vorteilhaft zunimmt.

Vorteilhaft führt die Kinematik des Plastifizierungs- und/oder Konditionierungsmittels zu einer besonders vorteilhaften Homogenisierung des designierten Schmelzestroms.

Weiterhin weist das hier vorgeschlagene Plastifizierungs- und/oder Konditionierungsmittel einen zu einem konventionellen Homogenisierungsextruder vergleichsweise geringen Scherenergieeintrag in den designierten Schmelzestrom und zusätzlich einen vergleichsweise systembedingt niedrigen notwendigen Druckaufbau für den designierten Schmelzestrom auf, wobei dies im Vergleich zum Stand der Technik auch gültig ist, wenn der Stoffstrom auch von dem Plastifizierungs- und/oder Konditionierungsmittel plastifiziert wird.

Der vergleichsweise geringe Scherenergieeintrag und der vergleichsweise systembedingt niedrige notwendige Druckaufbau in dem Plastifizierungs- und/oder Konditionierungsmittel führen besonders vorteilhaft dazu, dass der notwendige Energieeintrag in den designierten Schmelzestrom vergleichsweise gering ist.

Neben dem geringen systembedingten Energieeintrag in den designierten Schmelzestrom weist das Plastifizierungs- und/oder Konditionierungsmittel ein durch die Kinematik des Plastifizierungs- und/oder Konditionierungsmittels bedingtes vergleichsweise großes Verhältnis der Oberfläche des Plastifizierungs- und/oder Konditionierungsmittels zum Volumen des in dem Plastifizierungs- und/oder Konditionierungsmittel befindlichen designierten Schmelzestroms auf, wodurch sich eine vergleichsweise geringe Temperatur des Schmelzestroms beim Austritt aus dem Plastifizierungs- und/oder Konditionierungsmittel erreichen lässt, insbesondere da das große Oberflächen zu Volumenverhältnis eine vergleichsweise hohe Kühlleistung über die Oberflächen des Plastifizierungs- und/oder Konditionierungsmittels zulässt.

Die vorteilhaften Konditionierungseigenschaften unterstützen bei der Wärmeabfuhr aus dem designierten Schmelzestrom dahingehend, dass etwaige Randzonen mit einer lokal niedrigeren Temperatur durch die Kinematik vergleichsweise schnell wieder aufgelöst werden können.

Hierdurch eignet sich das vorgeschlagene Plastifizierungs- und/oder Konditionierungsmittel auch hervorragend zur Kühlung des designierten Schmelzestroms mittels dem auf den designierten Schmelzestrom mit entsprechenden Kühlmaßnahmen einwirkenden physikalischen Effekt der erzwungenen Konvektion. Insgesamt kann mit dem hier in Kombination mit einer Blasfolienanlage vorgeschlagenen Plastifizierungs- und/oder Konditionierungsmittel vorteilhaft eine hervorragende Prozesstemperaturkontrolle für den designierten Schmelzestrom bei einem gleichzeitig geringen vorteilhaften Schmelztemperaturniveau erreicht werden. Auch der Druck des designierten Schmelzestroms lässt sich mit dem Plastifizierungs- und/oder Konditionierungsmittel in vorteilhafter Weise in vergleichsweise weiteren Bereichen kontrollieren.

Die Kinematik des hier vorgeschlagenen Plastifizierungs- und/oder Konditionierungsmittels und die hohe Variabilität bei der Auswahl der Anzahl von Planetwalzen, den miteinander korrespondierenden Dimensionen von Zentralwelle und der zumindest einen Planetwalze, den Kontaktflächen zwischen Zentralwelle und der zumindest einen Planetwalze sowie der zumindest einen Planetwalze mit dem Gehäuse und dem einstellbaren Energieeintrag verleiht dem hier vorgeschlagenen Plastifizierungs-und/oder Konditionierungsmittel eine weitreichende Variabilität, welche sowohl ein Plastifizieren und/oder ein distributives Mischen und/oder ein dispersives Mischen und/oder ein Fördern des designierten Stoffstroms innerhalb des Plastifizierungs-und/oder Konditionierungsmittels ermöglicht.

Weiterhin ist unter anderem auch denkbar, dass eine Mehrzahl von Plastifizierungs-und/oder Konditionierungsmitteln aufweisend jeweils eine Zentralwelle und zumindest eine Planetwalze modular in Maschinenrichtung seriell hintereinander gekoppelt sein können. Hierdurch kann der Verfahrensweg hinsichtlich der Plastifizierung und Aufbereitung des designierten Schmelzestroms vervielfacht bzw. die Verfahrenstechnik den jeweiligen Erfordernissen angepasst werden. Weiterhin bietet ein derartiger modularer Aufbau die Möglichkeit ganze Prozessketten hintereinander zu schalten. Mittels eines jeweiligen Plastifizierungs- und/oder Konditionierungsmittels können mehrere Reaktionen, insbesondere Entgasen des designierten Schmelzestroms, Einspritzen von Flüssigkeiten und/oder Zugeben von Füll- und Feststoffkomponenten, hintereinander durchgeführt werden.

Zusätzlich führt die Kinematik des Plastifizierungs- und/oder Konditionierungsmittel zu einem im Vergleich vorteilhaft zu einem herkömmlichen Extruder geringen Scherenergieeintrag in den designierten Stoffmassenstrom sowie einer erstaunlich guten Selbstreinigungsfähigkeit des Plastifizierungs- und/oder Konditionierungsmittels, insbesondere hervorgerufen durch das Abrollen der zumindest einen Planetwalze auf der Zentralwelle sowie vorzugsweise das Abrollen der zumindest einen Planetwalze auf dem Gehäuse für das Plastifizierungs- und/oder Konditionierungsmittel.

Es konnte gezeigt werden, dass in einem Fall einer Randschichtbildung diese durch die umlaufende Bewegung der zumindest einen Planetwalze nahezu unmittelbar aufgelöst und der designierte Schmelzestrom kurzfristig zumindest mittelbar wieder homogenisiert werden kann.

Der vergleichsweise geringere mechanische Energieeintrag zum Betrieb des Plastifizierungs- und/oder Konditionierungsmittels kann besonders vorteilhaft dazu beitragen, dass eine geringe Temperatur des designierten Schmelzestroms an der Ringschlitzdüse des Blaskopfes erreicht werden kann. Dadurch kann beispielsweise die Produktionskapazität des Blasfolienanlage erhöht werden, beispielsweise um mehr als 20%. Die Temperatur des Schmelzestroms in der Ringschlitzdüse kann dazu mittels einer Steuerung mittels stetigem Vergleich zwischen der Messgröße Temperatur und einer Vorgabe für die Temperatur des Schmelzestroms überwacht und auf den gewünschten Wert durch eine Reduzierung eines Energieeintrags in den Schmelzestrom beziehungsweise durch Erhöhung des Energieaustrags aus dem Schmelzestrom im Plastifizierungs- und/oder Konditionierungsmittel abgesenkt werden. Der durch die Steuerung bereitgestellte Regelkreis kann beispielsweise auch eine Einhaltung einer baubedingten Druckobergrenze für den Schmelzestrom dadurch bewerkstelligen, dass bei Erreichen einer Druckobergrenze der Energieaustrag nicht weiter gesteigert bzw. der Energieeintrag nicht weiter reduziert wird. Die Steuerung ist für die Einstellung der Temperatur und/oder zur Einhaltung einer baubedingten Druckobergrenze mit entsprechend ein oder mehreren angeordneten Sensoren an der Blasfolienanlage bzw. dem Plastifizierungs- und/oder Konditionierungsmittel verbunden und mit geeigneten Mitteln ausgestaltet, die Messdaten der Sensoren zu überwachen, auszuwerten und die entsprechenden Komponenten entsprechend anzusteuern. Beispielsweise sind am Kühlextruder ein- und ausgangsseitig Druck- und Temperatursensoren positioniert, die Messdaten liefern, anhand derer der Kühlprozess mittels Antriebsdrehzahl und - drehmoment, Kühlmitteltemperatur und -durchfluss geregelt wird.

Hier wird nun ganz konkret eine Blasfolienanlage vorgeschlagen, welche ein Plastifizierungs- und/oder Konditionierungsmittel umfassend eine Zentralwelle und zumindest eine Planetwalze aufweist.

Gemäß einer ersten Variante ist das Plastifizierungs- und/oder Konditionierungsmittel gleichzeitig der Extruder der Blasfolienanlag und übernimmt auch die Funktion innerhalb der Blasfolienanlage den designierten Schmelzestrom zu plastifizieren und zu fördern. Gemäß dieser ersten Variante ist es erforderlich, dass das Plastifizierungs- und/oder Konditionierungsmittel angetrieben wird.

Gemäß einer zweiten Variante ist das Plastifizierungs- und/oder Konditionierungsmittel einem aus dem Stand der Technik bekannten Extruder in Maschinenrichtung nachgeschaltet, wobei das Plastifizierungs- und/oder Konditionierungsmittel dazu eingerichtet ist, den designierten Schmelzestrom zu homogenisieren, insbesondere hinsichtlich der Temperatur des Schmelzestroms zu homogenisieren. Weiterhin kann das Plastifizierungs- und/oder Konditionierungsmittel auch dazu eingerichtet sein, den designierten Schmelzestrom zu fördern. Ein Plastifizierungs- und/oder Konditionierungsmittel gemäß der zweiten Variante kann einen separaten Antrieb aufweisen, dieser ist jedoch nicht zwingend erforderlich.

Gemäß der zweiten Variante ist konkret unter anderem auch vorstellbar, dass das Plastifizierungs- und/oder Konditionierungsmittel mit dem Extruder in einem gemeinsamen Gehäuse angeordnet ist oder ein separates Gehäuse aufweist.

Sowohl mit einer Blasfolienanlage nach der ersten oder zweiten Variante kann vorteilhaft eine geringere Temperatur des Schmelzestroms an der Ringschlitzdüse erreicht werden, wodurch die Produktionskapazität der Blasfolienanlage vorteilhaft gesteigert werden kann.

Weiterhin wird hier unter anderem eine Blasfolienanlage gemäß der ersten oder zweiten Variante zur Verarbeitung von empfindlichen Polymeren vorgeschlagen, insbesondere zur Verarbeitung von empfindlichen Biopolymeren. Das Plastifizierungs- und/oder Konditionierungsmittel ermöglicht besonders vorteilhaft eine schonende, insbesondere temperaturschonende und/oder druckschonende, Plastifizierung eines solchen empfindlichen Polymers und kann diesen vorzugsweise auch ideal und schonend homogenisieren.

Zweckmäßigerweise sind die Zentralwelle und/oder die zumindest eine Planetwalze dazu eingerichtet, durch einen Motor angetrieben zu werden.

### Begrifflich sei hierzu Folgendes erläutert:

Ein "Motor" wird als eine Kraftmaschine verstanden, welche mechanische Arbeit verrichtet, indem sie thermische, chemische, hydraulische, pneumatische oder elektrische Energie in Bewegungsenergie umwandelt.

Vorzugsweise wird unter einem Motor ein Elektromotor verstanden, insbesondere ein drehzahlvariabler Synchronmotor.

Vorteilhaft kann über eine von einem Motor angetriebene Zentralwelle und/oder zumindest eine von einem Motor angetriebene Planetwalze der Energieeintrag kontrolliert werden, der von dem Plastifizierungs- und Konditionierungsmittel in den designierten Schmelzestrom ausgeht. Hierdurch kann die Prozesskontolle weiter vorteilhaft erhöht und die Einsatzvariabilität des Gesamtsystems erweitert werden, sodass Umstellungen auf andere Ausgangsmaterialien oder zu erzielende Eigenschaften der Folienbahn einfacher und/oder schneller angepasst werden können.

Weiterhin kann bei einem angetriebenen Plastifizierungs- und/oder Konditionierungsmittel etwaig auf einen separaten Extruder verzichtet werden.

Gemäß einer optionalen Ausführungsform weisen die Zentralwelle und/oder die zumindest eine Planetwalze zumindest einen schneckenförmigen Gang auf.

### Begrifflich sei hierzu Folgendes erläutert:

Unter einem "schneckenförmigen Gang" wird eine wendelförmige Geometrie verstanden, welche sich gegenüber dem überwiegend zylindrischen Kern der Zentralwelle und/oder der Planetwalze abhebt und diesen helixförmig umgibt.

Ein schneckenförmiger Gang einer Zentralwelle und/oder einer Planetwalze ist vorzugsweise dazu eingerichtet, dass eine Zentralwelle und/oder eine Planetwalze bei einer Drehung um die jeweils eigene Achse ein Material im Inneren eines Plastifizierungs- und/oder Konditionierungsmittels in einer axialen Richtung fördern kann. Mittels dem mit einem schneckenförmigen Gang erzeugbaren Druck auf den designierten Stoffstrom kann dieser plastifiziert, homogenisiert und/oder gefördert werden.

Nach einer besonders bevorzugten Ausführungsform weisen die Zentralwelle und die zumindest eine Planetwalze eine korrespondierende Schrägverzahnung auf.

### Begrifflich sei hierzu Folgendes erläutert:

Verläuft die Anordnung der Zähne auf einer Welle nicht parallel zur Rotationsachse, so spricht man von einer "Schrägverzahnung". Unter einer "korrespondierenden Schrägverzahnung" wird verstanden, dass zwei Körper, insbesondere die Zentralwelle und die zumindest eine Planetwalze jeweils eine Schrägverzahnung aufweisen, wobei die jeweiligen Verzahnungen dazu eingerichtet sind, dass sie gegenseitig ineinander eingreifen und regulär aufeinander abrollen können.

Durch die Schrägverzahnung kann vorteilhaft erreicht werden, dass der designierte Massenstrom von dem Plastifizierungs- und/oder Konditionierungsmittel in einer axialen Richtung gefördert wird.

Weiterhin kann durch die korrespondierende Schrägverzahnung vorteilhaft erreicht werden, dass das Plastifizierungs- und/oder Konditionierungsmittel passiv von dem designierten Schmelzestrom angetrieben wird.

Weiterhin kann durch die Auswahl der Schrägverzahnung sowohl die axiale Durchmischung als auch die Querdurchmischung des designierten Stoffmassenstroms in dem Plastifizierungs- und/oder Konditionierungsmittel vorteilhaft angepasst werden.

Bevorzugt wird hier ebenfalls vorgeschlagen, die Zentralwelle und die zumindest eine Planetwalze in Axialrichtung mit unterschiedlichen Schrägverzahnungen, insbesondere mit unterschiedlichen Schrägverzahnungswinkeln, auszustatten. Dies kann konkret auch durch unterschiedliche in axialer Richtung variierende Segmente der Zentralwelle und/oder der zumindest einen Planetwalze umgesetzt werden, wobei vorzugsweise darauf geachtet werden kann, dass bereichsweise stets korrespondierende Verzahnungen zwischen der Zentralwelle und der zumindest einen Planetwalze beibehalten bleiben.

Hierdurch kann vorteilhaft der Druckgradient und/oder der Energieeintrag auf den designierten Stoffstrom in dem Plastifizierungs- und/oder Konditionierungsmittel an die Prozessbedürfnisse angepasst werden.

Unter anderem kann mittels unterschiedlicher Schrägverzahnungswinkel vorteilhaft erreicht werden, dass empfindliche Polymere, insbesondere Bioploymere, schonend plastifiziert und homogenisiert werden können.

Besonders zweckmäßig sind die Zentralwelle und die zumindest eine Planetwalze mit dem Extruder in einem gemeinsamen Gehäuse angeordnet.

### Begrifflich sei hierzu Folgendes erläutert:

Unter einem "Gehäuse" wird eine feste Hülle verstanden, welche dazu eingerichtet ist, die von dem Gehäuse umgebenen Komponenten vor Einwirkungen von außen schützend zu umgeben oder die Umgebung des Gehäuses vor den von dem Gehäuse umgebenen Komponenten im Inneren zu schützen.

Unter einem "gemeinsamen Gehäuse" wird verstanden, dass der Extruder gemeinsam mit der Zentralwelle und der zumindest einen Planetwalze in einem Gehäuse angeordnet sind, wobei das gemeinsame Gehäuse auch mehrteilig ausgeführt sein kann.

Vorteilhaft können hierdurch Bauraum und/oder Kosten eingespart werden.

Optional weist der Extruder ein erstes Gehäuse auf und dass die Zentralwelle und die zumindest eine Planetwalze sind gemeinsam in einem zweiten Gehäuse angeordnet.

### Begrifflich sei hierzu Folgendes erläutert:

Sind der Extruder und die Zentralwelle und die zumindest eine Planetwalze nicht in einem gemeinsamen, sondern in getrennten Gehäusen angeordnet, so umgibt das "erstes Gehäuse" den Extruder und das "zweite Gehäuse" das Plastifizierungs- und/oder Konditionierungsmittel umfassend die Zentralwelle und die zumindest eine Planetwalze.

Vorteilhaft kann hierdurch eine Funktionstrennung zwischen Extruder und dem Plastifizierungs- und/oder Konditionierungsmittel erreicht und die Nachrüstbarkeit und/oder Austauschbarkeit des Plastifizierungs- und/oder Konditionierungsmittels verbessert werden.

Nach einer besonders bevorzugten Ausführungsform weist das gemeinsame Gehäuse und/oder das zweite Gehäuse eine Innenverzahnung auf, insbesondere eine mit einer Verzahnung der zumindest einen Planetwalze korrespondierende Innenverzahnung.

### Begrifflich sei hierzu Folgendes erläutert:

Weist ein Körper, insbesondere das gemeinsame Gehäuse und/oder das zweite Gehäuse, eine Bohrung auf, an deren Mantelfläche eine Verzahnung ausgebildet ist, so spricht man von einer "Innenverzahnung". Ist eine Innenverzahnung derart ausgebildet, dass ein weiterer Körper mit seiner außenliegenden Verzahnung, insbesondere die zumindest eine Planetwalze, mit seiner Schrägverzahnung in die Innenverzahnung eingreifen und regulär abrollen kann, so handelt es sich um eine "korrespondierende Innenverzahnung".

Die korrespondierende Verzahnung von der zumindest einen Planetwalze mit dem Gehäuse des Plastifizierungs- und/oder Konditionierungsmittels ermöglicht neben dem Spalt zwischen Zentralwelle und Planetwalze einen zweiten Spalt zwischen der zumindest einen Planetwalze und dem Gehäuse, welcher zur Plastifizierung und/oder Konditionierung des designierten Schmelzestroms genutzt werden kann.

Bevorzugt ist die Zentralwelle temperierbar ausgeführt.

### Begrifflich sei hierzu Folgendes erläutert:

Sofern die Temperatur mit einem hierfür eingerichteten Mittel aktiv beeinflusst werden kann, so wird hierunter verstanden, dass eine "Temperierbarkeit" vorliegt.

Vorzugsweise kann die Temperatur der Zentralwelle gesteuert und/oder geregelt werden.

Hier wird konkret vorgeschlagen die Zentralwelle zu Kühlen, insbesondere im stationären Produktionsbetrieb der Blasfolienanlage, und damit einen Beitrag zur Absenkung der Temperatur des designierten Schmelzestroms in der Ringschlitzdüse zu leisten.

Damit kann durch eine temperierte Zentralwelle auch ein Beitrag zur Steigerung der Produktionsleistung der Blasfolienanlage erreicht werden.

Weiterhin sei konkret auch daran gedacht die Zentralwelle zu heizen, insbesondere zur Inbetriebnahme der Blasfolienanlage, sodass diese schnellstmöglich in einen thermisch stationären Produktionsbetrieb überführt werden kann.

Es sei ebenfalls daran gedacht, dass eine temperierbare Zentralwelle zum Auftauen eines eingefrorenen Plastifizierungs- und/oder Konditionierungsmittels und/oder zum Reduzieren der notwendigen mechanischen Arbeit zum Plastifizieren des designierten Schmelzestroms genutzt werden kann.

Weiterhin kann die Reinigung des Plastifizierungs- und/oder Konditionierungsmittels durch eine temperierbare Zentralwelle unterstützt werden.

Gemäß einer besonders zweckmäßigen Ausführungsform ist das gemeinsame Gehäuse oder das zweite Gehäuse temperierbar ausgeführt.

Durch ein temperierbares Gehäuse können die zuvor beschriebenen Vorteile erreicht werden, welche auch mit einer temperierbaren Zentralwelle erreicht werden können.

Vorzugsweise sind die Zentralwelle und das Gehäuse des Plastifizierungs- und/oder Konditionierungsmittels temperierbar, wodurch die zuvor beschriebenen Vorteile in einer stärkeren Ausprägung erreicht werden können.

Bevorzugt weisen die Zentralwelle und/oder das gemeinsame Gehäuse und/oder das zweite Gehäuse eine Flüssigkeitskühlung auf.

### Begrifflich sei hierzu Folgendes erläutert:

Unter einer "Flüssigkeitskühlung" versteht man die Kühlung eines wärmeerzeugenden Geräts und/oder einzelner Komponenten eines wärmeerzeugenden Geräts, insbesondere der Zentralwelle und/oder des gemeinsamen Gehäuses und/oder des zweiten Gehäuses, mit Hilfe einer Flüssigkeit.

Vorteilhaft kann mittels einer Flüssigkeitskühlung im Vergleich zu einer Luftkühlung wegen der höheren möglichen spezifischen Wärmekapazität einer Kühlflüssigkeit eine höhere Wärmemenge abgeführt werden.

Weiterhin kann eine Flüssigkeitskühlung mit einem vergleichsweise geringen Aufwand kostengünstig realisiert werden.

Besonders bevorzugt sind die von Flüssigkeit durchströmten Bereiche der Zentralwelle und/oder des gemeinsamen Gehäuses und/oder des zweiten Gehäuses direkt in dem Bereich des Plastifizierungs- und/oder Konditionierungsmittels angeordnet, welche hochbelastet sind und daher einen besonders hohen Wärmeeintrag aufweisen. Vorteilhaft kann so vorteilhaft eine möglichst homogene Temperaturführung in dem Plastifizierungs-und/oder Konditionierungsmittel erreicht werden.

Vorzugsweise sei unter einer Flüssigkeitskühlung auch an eine Flüssigkeitstemperierung gedacht, sodass das hier vorgeschlagene Plastifizierungs- und/oder Konditionierungsmittel mittels der Flüssigkeitstemperierung auch beheizt werden kann. Dies kann insbesondere bei der Aufnahme des Produktionsbetriebs mit einer kalten Blasfolienanlage hilfreich sein, da die Maschine mittelbar durch die Temperierung schneller auf eine stationäre Temperatur gebracht werden kann, welche eine gleichbleibende Qualität der hergestellten Folienbahn ermöglicht.

Vorzugsweise ist die Zentralwelle zum Zweck einer Flüssigkeitskühlung mit den entsprechend benötigten Kanälen zur Führung der Kühlflüssigkeit hohlgebohrt.

Besonders bevorzugt weist die Zentralwelle und/oder das gemeinsame Gehäuse oder das zweite Gehäuse ein Peltier -Element auf.

Unter einem "Peltier-Element" wird ein elektrothermischer Wandler verstanden, der basierend auf dem Peltier-Effekt bei Stromdurchfluss eine Temperaturdifferenz oder bei Temperaturdifferenz einen Stromfluss (Seebeck-Effekt) erzeugt.

Vorzugsweise können Peltier-Elemente sowohl zur Kühlung als auch - bei Stromrichtungsumkehr - zum Heizen verwendet werden.

Mit einem Peltier-Element kann auf besonders einfache, bauraumschonende und vorteilhafte Weise elektrischer Strom in Wärme oder Wärme in einen elektrischen Strom gewandelt werden.

Vorteilhaft kann die Temperierung des Plastifizierungs- und/oder Konditionierungsmittels mit einem oder mehreren Peltier-Elementen vergleichsweise einfach umgesetzt und der mit der Temperierung verbundene Prozess gut kontrolliert werden, insbesondere mittels einem unmittelbar wirksamen physikalischen Effekt, vorzugsweise im Rahmen einer Steuerung und/oder einer Regelung der Temperatur des designierten Schmelzestroms in der Blasfolienanalage.

Optional weist das Plastifizierungs- und/oder Konditionierungsmittel eine Zuführung zum Zusetzen eines Additivs auf.

### Begrifflich sei hierzu Folgendes erläutert:

Unter einer "Zuführung" wird ein Mittel verstanden, welches dazu eingerichtet ist, ein Additiv in eine Wirkverbindung mit dem Plastifizierungs- und/oder Konditionierungsmittel zu bringen.

Vorzugsweise kann mittels einem Kanal, wobei der Kanal vorzugsweise bedruckbar ausgeführt sein kann, ein Additiv in den Arbeitsbereich des Plastifizierungs- und/oder Konditionierungsmittels eingeleitet werden.

Hierdurch kann ein Additiv in eine Wirkverbindung mit dem designierten Materialstrom innerhalb des Plastifizierungs- und/oder Konditionierungsmittels gebracht werden, wodurch das Additiv dem designierten Materialstrom innerhalb des Plastifizierungs-und/oder Konditionierungsmittels "zugeführt" werden kann.

Unter einem "Additiv" wird ein Hilfsstoff und/oder ein Zusatzstoff verstanden, der dem designierten Materialstrom in einer Blasfolienanlage zugesetzt werden kann.

Vorzugsweise wird ein Additiv dem designierten Materialstrom in der Blasfolienanlage lediglich in einer auf den designierten Materialstrom bezogenen geringen Menge zugeführt.

Vorzugsweise wird ein Additiv in dem designierten Materialstrom in der Blasfolienanlage mittelbar oder unmittelbar durch die Wirkverbindung mit dem Plastifizierungs- und/oder Konditionierungsmittel gelöst.

Vorteilhaft kann durch den Einsatz eines Additivs ein positiver Effekt auf Herstellung, Lagerung, Verarbeitung oder Produkteigenschaften während und nach der Gebrauchsphase der Folienbahn erreicht werden.

Weiterhin optional weist das Plastifizierungs- und/oder Konditionierungsmittel einen Anschluss zum Aufbringen eines Unterdrucks zum Entgasen eines Schmelzestroms auf.

### Begrifflich sei hierzu Folgendes erläutert:

Unter einem "Anschluss" wird jedes geeignete Mittel verstanden, mittels welchem ein Unterdruck auf den designierten Materialstrom in dem Plastifizierungs- und/oder Konditionierungsmittel aufgebracht werden kann. Hierdurch kann ein Unterdruck in einem Wirkverbindung mit einem designierten Materialstrom in der Blasfolienanlage gebracht werden.

In Abhängigkeit der Materialzusammensetzung und/oder dem Verarbeitungsverfahren des designierten Materialstroms in einer Blasfolienanlage kann der Schmelzestrom in der Blasfolienanlage flüchtige Bestandteile aufweisen, insbesondere in Form von Monomeren, Feuchtigkeit, Gasen, insbesondere Luft - oder Lösungsmittel. Wird ein Unterdruck in eine Wirkverbindung mit dem Schmelzestrom gebracht, können die flüchtigen Bestandteile von dem Schmelzestrom abgezogen werden. Dieser Vorgang wird auch als "Entgasen" bezeichnet.

Ein "Schmelzestrom" ist ein flüssiger Materiestrom, welcher hauptsächlich aus aufgeschmolzenem thermoplastischen Kunststoff besteht.

Vorzugsweise kann hierdurch erreicht werden, dass der designierte Schmelzestrom einer Blasfolienanlage entgast werden kann.

Bevorzugt weist das Plastifizierungs- und/oder Konditionierungsmittel einen Anlaufring auf.

### Begrifflich sei hierzu Folgendes erläutert:

Unter einem "Anlaufring" wird ein separates und vorzugsweise lösbares und damit austauschbares Bauteil des Plastifizierungs- und/oder Konditionierungsmittels verstanden, welches dazu eingerichtet ist, die zumindest eine Planetwalze in zumindest einer Richtung axial zu fixieren, sodass die zumindest eine Planetwalze beim regulären Betrieb des Plastifizierungs- und/oder Konditionierungsmittels nicht in Richtung des designierten Schmelzestroms aus dem Plastifizierungs- und/oder Konditionierungsmittel entweichen kann, insbesondere nicht durch herausdrehen und/oder herausschwemmen.

Gemäß einer besonders bevorzugten Ausfiihrungsform weist das Plastifizierungs-und/oder Konditionierungsmittel einen Stauring auf, wobei die Zentralwelle und der Stauring einen Spalt zum Austretenlassen des Schmelzestroms aus dem Plastifizierungs-und/oder Konditionierungsmittel ausformen.

### Begrifflich sei hierzu Folgendes erläutert:

Ein "Stauring" wird als ein optionales und vorzugsweise austauschbares Bauteil des Plastifizierungs- und/oder Konditionierungsmittels verstanden, welcher gemeinsam mit der Zentralwelle den Spalt oder Düsenspalt ausformt, durch welchen der designierte Schmelzestrom das Plastifizierungs- und/oder Konditionierungsmittel verlässt.

Vorzugsweise definiert die Dimensionierung des Staurings die Austrittsfläche mit, durch welche der designierte Schmelzestrom aus dem Plastifizierungs- und/oder Konditionierungsmittel ausströmen kann.

Somit kann mittels der Anpassung und/oder Auswahl des Staurings der in dem Plastifizierungs- und/oder Konditionierungsmittel wirksame Gegendruck auf den designierten Schmelzestrom beim designierten Ausströmen aus dem Plastifizierungs-und/oder Konditionierungsmittel vorteilhaft beeinflusst werden.

Weiterhin kann durch den von dem Stauring mitgebildeten Spalt am designierten Austritt des Schmelzestroms aus dem Plastifizierungs- und/oder Konditionierungsmittel auch die Verweilzeit beziehungsweise das Verweilzeitspektrum des designierten Stoffstromes beeinflusst werden, wodurch sowohl die axiale Durchmischung als auch die Querdurchmischung des designierten Stoffstromes in dem Plastifizierungs- und/oder Konditionierungsmittel angepasst werden kann.

Durch den zumindest mittelbar von dem Stauring definierten Spalt kann weiterhin der benötigte Energieeintrag auf den designierten Stoffstrom und damit zumindest implizit auch die Schmelzetemperatur vorteilhaft eingestellt werden, insbesondere auch in Abhängigkeit des Ausgangsmaterials und/oder der gewünschten Eigenschaften der herzustellenden Folienbahn.

Vorteilhaft kann der Stauring durch die Definition des Spaltes auch zur Druckhomogenisierung des Schmelzestroms beitragen.

Besonders bevorzugt handelt es sich bei dem Plastifizierungs- und Konditionierungsmittel um einen Planetwalzenextruder.

### Begrifflich sei hierzu Folgendes erläutert:

Ein "Planetwalzenextruder" ist eine spezifische Bauform eines Extruders, welcher eine angetriebene Zentralwelle aufweist, auf welcher sich eine oder mehrere Planetwalzen, abwälzen können. Die eine oder mehreren umlaufenden Planetwalzen werden zusätzlich über eine innenverzahnte Buchse geführt, welche vorzugsweise in einem Planetwalzenextrudergehäuse angeordnet ist.

Vorzugsweise weist ein Planetwalzenextruder eine Temperierung auf, wobei die Temperierung über die Zentralwelle und/oder das Planetwalzenextrudergehäuse erfolgen kann, vorzugsweise mittels einer Flüssigkeitskühlung.

Die eine oder mehreren umlaufenden Planetwalzen erfassen beim Umlaufen der Zentralwelle das Material im Inneren des Extruders und durch das Eintauchen der Zähne in die korrespondierenden Zahnlücken wird das Material im Inneren des Extruders zu besonders dünnen Schichten ausgewalzt.

Weiterhin vorzugsweise weist ein Planetwalzenextruder eine Schrägverzahnung auf mittels welcher das Material im Inneren des Extruders in Extrusionsrichtung transportiert werden kann.

Vorteilhaft kann durch einen Planetwalzenextruder eine optimale Plastifizierung, Dispergierung und Homogenisierung des Materials im Inneren des Extruders erreicht werden, insbesondere in Folge der sich wiederholenden Dünnschichtauswalzung des Materials im Inneren des Extruders mittels den Planetwalzen und/oder durch die vorteilhafte Temperierbarkeit des Planetwalzenextruders.

Optional weist die Blasfolienanlage eine Mehrzahl von Extrudern auf, wobei jeder Extruder einen separaten Schmelzestrom designiert bereitstellen kann und wobei zumindest ein Schmelzestrom in Maschinenrichtung designiert ein Plastifizierungs-und/oder Konditionierungsmittel umfassend eine Zentralwelle und zumindest eine Planetwalze durchströmt.

Im Stand der Technik sind Blasfolienanlagen zur Herstellung von mehrschichtigen Folienbahnen bekannt, wobei die unterschiedlichen Schichten unterschiedliche Materialien und/oder unterschiedliche Eigenschaften aufweisen können. Dementsprechend kann der für eine Schicht benötigte designierte Schmelzestrom von jeweils einem individuellen Extruder bereitgestellt werden.

Hier wird nun konkret vorgeschlagen, gegenüber dem bekannten Stand der Technik zumindest einen der Extruder durch einen Extruder aufweisend ein Plastifizierungs-und/oder Konditionierungsmittel umfassend eine Zentralwelle und zumindest eine Planetwalze auszutauschen oder um ein entsprechendes Plastifizierungs- und/oder Konditionierungsmittel zu ergänzen.

Es versteht sich, dass auch die weiteren Anlagen zur Aufbereitung der designierten Schmelzestromstränge ebenfalls wie vorgeschlagen modifiziert werden können.

Nach einem zweiten Aspekt der Erfindung löst die Aufgabe ein Herstellverfahren für eine Folienbahn aus einem thermoplastischen Kunststoff mittels einer Blasfolienanlage aufweisend ein Plastifizierungs- und/oder Konditionierungsmittel umfassend eine Zentralwelle und zumindest eine Planetwalze gemäß dem ersten Aspekt der Erfindung.

### Begrifflich sei hierzu Folgendes erläutert:

Unter einem "Herstellverfahren" wird ein Urformverfahren zur Herstellung einer Folienbahn aus einem thermoplastischen Kunststoff verstanden, insbesondere zur Herstellung einer Folienbahn aus einem thermoplastischen Kunststoff mittels einer Blasfolienanlage, besonders bevorzugt mittels einer Blasfolienanlage gemäß dem ersten Aspekt der Erfindung.

Es versteht sich, dass sich die Vorteile einer Blasfolienanlage aufweisend ein Plastifizierungs- und/oder Konditionierungsmittel umfassend eine Zentralwelle und zumindest eine Planetwalze gemäß dem ersten Aspekt der Erfindung, wie vorstehend beschrieben, unmittelbar auf ein Herstellverfahren für eine Folienbahn aus einem thermoplastischen Kunststoff mittels einer Blasfolienanlage aufweisend ein Plastifizierungs- und/oder Konditionierungsmittel umfassend eine Zentralwelle und zumindest eine Planetwalze gemäß dem ersten Aspekt der Erfindung erstrecken.

Bevorzugt wird einem Schmelzestrom in Maschinenrichtung vor oder in dem Plastifizierungs- und/oder Konditionierungsmittel ein Additiv zugesetzt.

Vorteilhaft kann durch den Einsatz eines Additivs ein positiver Effekt auf Herstellung, Lagerung, Verarbeitung oder Produkteigenschaften während und nach der Gebrauchsphase der Folienbahn erreicht werden.

Besonders zweckmäßig wird ein Schmelzestrom mittels dem Plastifizierungs- und/oder Konditionierungsmittel temperiert.

Vorteilhaft kann hierdurch eine Reduzierung der Temperatur des designierten Schmelzestroms in der Ringschlitzdüse und damit eine höhere Produktionskapazität der Blasfolienanlage erreicht werden.

Optional die Temperatur des Schmelzestroms gesteuert und/oder geregelt.

### Begrifflich sei hierzu Folgendes erläutert:

Eine "Steuerung" meint eine Verstellung zumindest einer Einstellgröße der Blasfolienanlage mit der Zielsetzung die Temperatur des Schmelzestroms anzupassen, wobei die Temperatur des Schmelzestroms nicht automatisch an die Verstellung der zumindest einen Einstellgröße der Blasfolienanlage gekoppelt ist.

Unter einer "Regelung" der Temperatur des Schmelzestroms wird ist ein Zusammenspiel aus stetiger Erfassung einer Messgröße, insbesondere der Temperatur des Schmelzestroms, und der Steuerung der Blasfolienanlage in Abhängigkeit einer Vorgabe für die Temperatur des Schmelzestroms verstanden. Dabei findet ein stetiger Vergleich der Messgröße und der Vorgabe für die Temperatur des Schmelzestroms und ein bedarfsgemäßer Eingriff hinsichtlich der Verstellung der zumindest einen Einstellgröße statt.

Vorzugsweise wird unter der Steuerung und/oder Regelung die Einstellung einer Einstellgröße, vorzugsweise aller Einstellgrößen, der Blasfolienanlage verstanden, bevorzugt um eine vordefinierte Zielsetzung zu erreichen, insbesondere vordefinierte Materialeigenschaften einer Folienbahn.

Vorzugsweise ist eine Einstellgröße einer Blasfolienanlage zur Herstellung einer Folienbahn aus Kunststoff eine eingestellte Temperatur, eine eingestellte Extrusionsgeschwindigkeit und/oder eine eingestellte Drehzahl des Extruders. Bei den vorgenannten Einstellgrößen handelt es sich lediglich um eine kleine Auswahl von Einstellgrößen aus einer großen Anzahl von möglichen Einstellgrößen einer derartigen Blasfolienanlage, welche ein Verständnis dafür bilden sollen, was hier unter einer Einstellgröße verstanden wird.

Vorteilhaft kann hierdurch eine höhere Prozesssicherheit des Herstellverfahrens und eine bessere Proessgenauigkeit des Herstellverfahrens erreicht werden.

Bevorzugt wird ein Schmelzestrom mittels dem Plastifizierungs- und/oder Konditionierungsmittel entgast.

Vorteilhaft kann hierdurch erreicht werden, dass flüchtige Bestandteile des designierten Schmelzestroms vor dem Ausformen der Folienbahn aus dem designierten Schmelzestrom entfernt oder zumindest deren Konzentration reduziert werden kann.

Bevorzugt weist ein Ausgangsmaterial für den designierten Schmelzestrom und/oder ein Additiv ein Metallocen auf.

### Begrifflich sei hierzu Folgendes erläutert:

Unter einem "Metallocen" wird eine Gruppe von metallorganischen Verbindungen verstanden, in denen ein zentrales Metallatom wie in einem Sandwich zwischen zwei Cyclopentadienyl-Liganden angeordnet ist.

Vorzugsweise wird unter einem Metallocen ein Katalysator für die Olefin-Polymerisation verstanden.

Vorteilhaft kann durch Verwendung eines Metallocens als Additiv während der Herstellung einer Folienbahn erreicht werden, dass die Molekulargewichtsverteilung der entstehenden Polymere in der Folienbahn auf engen Grenzen beschränkt werden kann.

Durch die enge Molekulargewichtsverteilung bereits in dem Schmelzestrom kann unter anderem vorteilhaft erreicht werden, dass sich der Schmelzestrom insbesondere bei hohen Scherraten weniger strukturviskos verhält, wodurch der Schmelzestrom besser zu einer Folienbahn verarbeitet werden kann.

Weiterhin kann vorteilhaft eine Folienbahn erreicht werden, welche sich durch eine außergewöhnlich hohe Zähigkeit, hervorragende optische Eigenschaften und/oder einen gleichmäßigen Comonomer-Anteil auszeichnet.

Es hat sich als vorteilhaft herausgestellt, dass eine Folienbahn, welche mit einem Metallocen als Additiv hergestellt worden ist, einen geringen Anteil niedermolekularer (extrahierbarer) Bestandteile sowie eine niedrige Schweiß- und Siegeltemperatur aufweist, wodurch sie sich besonders gut für den Lebensmittelbereich eignet.

Weiterhin hat sich gezeigt, dass mit dem Additiv Metallocen Folienbahnen hergestellt werden können, welche bei vergleichbarer mechanischer Festigkeit um bis zu 25 % dünner sind als ansonsten gleiche Folienbahnen ohne das Additiv Metallocen.

Es sei ausdrücklich darauf hingewiesen, dass der Gegenstand des zweiten Aspekts mit dem Gegenstand der vorstehenden Aspekte der Erfindung vorteilhaft kombinierbar ist, und zwar sowohl einzeln oder in beliebiger Kombination kumulativ.

Nach einem dritten Aspekt löst die Aufgabe eine Folienbahn aus thermoplastischem Kunststoff, wobei die Folienbahn mit einer Blasfolienanlage nach dem ersten Aspekt der Erfindung und/oder gemäß einem Herstellverfahren nach dem zweiten Aspekt der Erfindung hergestellt worden ist.

Es versteht sich, dass sich die Vorteile einer Blasfolienanlage nach dem ersten Aspekt der Erfindung und/oder eines Herstellverfahrens nach dem zweiten Aspekt der Erfindung, wie vorstehend beschrieben, unmittelbar auf eine Folienbahn aus thermoplastischem Kunststoff, hergestellt mit einer Blasfolienanlage nach dem ersten Aspekt der Erfindung und/oder gemäß einem Herstellverfahren nach dem zweiten Aspekt der Erfindung, erstrecken.

Es sei ausdrücklich darauf hingewiesen, dass der Gegenstand des dritten Aspekts mit dem Gegenstand der vorstehenden Aspekte der Erfindung vorteilhaft kombinierbar ist, und zwar sowohl einzeln oder in beliebiger Kombination kumulativ.

Nach einem vierten Aspekt löst die Aufgabe ein Umrüstverfahren zum Umrüsten einer herkömmlichen Blasfolienanlage zu einer Blasfolienanlage aufweisend ein Plastifizierungs- und/oder Konditionierungsmittel umfassend eine Zentralwelle und zumindest eine Planetwalze gemäß dem ersten Aspekt der Erfindung.

### Begrifflich sei hierzu Folgendes erläutert:

Unter einem "Umrüstverfahren" wird ein Verfahren verstanden, bei welchem eine aus dem Stand der Technik bekannte Blasfolienanlage zu einer Blasfolienanlage gemäß dem ersten Aspekt der Erfindung umgebaut wird.

Vorzugsweise wird unter einem Umrüsten auch ein Einrüsten verstanden, wobei beim Einrüsten in eine bestehende Blasfolienanlage ein Bauteil und/oder eine Baugruppe eingerüstet wird, sodass die bestehende Blasfolienanlage beim Einrüsten um weitere Bauteile und/oder eine weitere Baugruppe ergänzt wird. Vorzugsweise wird dabei ein Anlagenbestandteil, insbesondere der Extruder zunächst gelöst und an einer anderen Stelle erneut fixiert, sodass der benötigte Bauraum für das Plastifizierungs- und/oder Konditionierungsmittel bereitgestellt werden kann.

Unter einer "herkömmlichen Blasfolienanlage" wird eine im Stand der Technik bekannte Blasfolienanlage verstanden.

Besonders bevorzugt wird in Maschinenrichtung zwischen einem Extruder und einem Blaskopf einer herkömmlichen Blasfolienanlage ein Plastifizierungs- und/oder Konditionierungsmittel umfassend eine Zentralwelle und zumindest eine Planetwalze eingerüstet, insbesondere ein Planetwalzenextruder.

Optional wird ein Extruder einer herkömmlichen Blasfolienanlage gegen einen Extruder aufweisend ein Plastifizierungs- und/oder Konditionierungsmittel umfassend eine Zentralwelle und zumindest eine Planetwalze ausgetauscht, insbesondere gegen einen Planetwalzenextruder.

Gemäß einer weiterhin optionalen Ausführungsform wird ein Extruder einer herkömmlichen Blasfolienanlage zu einem Extruder aufweisend ein Plastifizierungs-und/oder Konditionierungsmittel umfassend eine Zentralwelle und zumindest eine Planetwalze umgerüstet.

Es sei ausdrücklich darauf hingewiesen, dass der Gegenstand des vierten Aspekts mit dem Gegenstand der vorstehenden Aspekte der Erfindung vorteilhaft kombinierbar ist, und zwar sowohl einzeln oder in beliebiger Kombination kumulativ.

Weitere Vorteile, Einzelheiten und Merkmale der Erfindung ergeben sich nachfolgend aus den erläuterten Ausführungsbeispielen. Dabei zeigen im Einzelnen:
Figur 1: eine Blasfolienanlage mit einem Plastifizierungs- und/oder Konditionierungsmittel in schematischer Ansicht; und
Figur 2: ein Plastifizierungs- und/oder Konditionierungsmittel umfassend eine Zentralwelle und zumindest eine Planetwalze in einem schematischen Ausschnitt.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

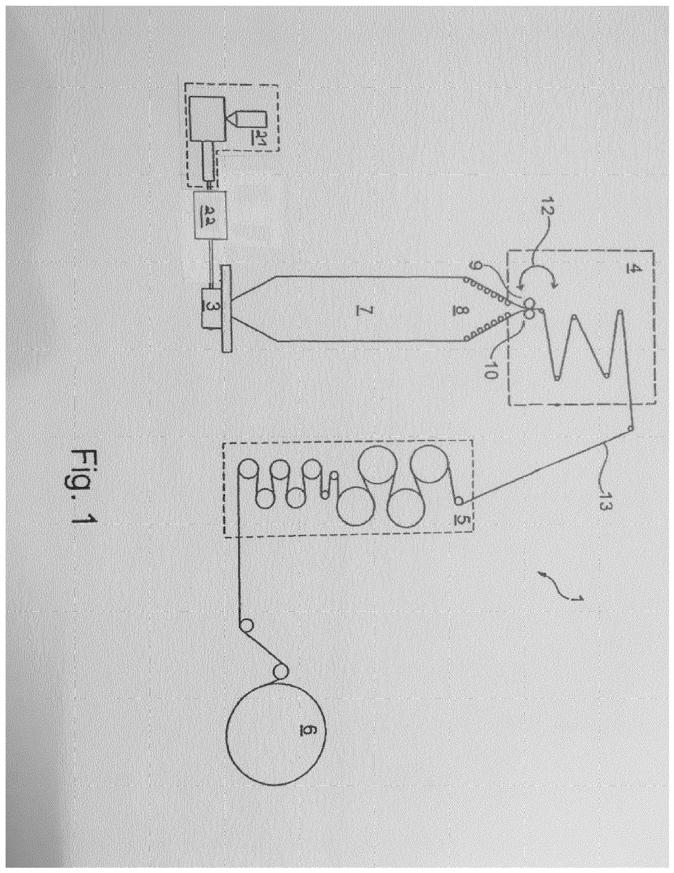

Die Blasfolienanlage 1 in Figur 1 besteht im Wesentlichen aus einem Extruder 21, einem Plastifizierungs- und/oder Konditionierungsmittel 22, einem Blaskopf 3, einem reversierenden Wendeabzug 4, einer Reckanlage 5 und einem Wickler6.

Der Extruder 21 fördert und plastifiziert einen designierte Schmelzestrom (nicht dargestellt) aus einem thermoplastischen Kunststoff. In Maschinenrichtung (nicht bezeichnet) stromab des Extruders 21 tritt der designierte Schmelzestrom (nicht dargestellt) in das Plastifizierungs- und/oder Konditionierungsmittel 22 ein und wird dort konditioniert, insbesondere homogenisiert und gekühlt.

Weiterhin in Maschinenrichtung (nicht bezeichnet) stromab des Plastifizierungs-und/oder Konditionierungsmittels 22 strömt der designierte Schmelzestrom (nicht dargestellt) in den Blaskopf 3 mit einer Ringspaltdüse (nicht dargestellt), durch welche der designierte Schmelzestrom (nicht dargestellt) aus dem Blaskopf 3 designiert austritt.

Die austretende Schmelzestrom formt eine Folienblase 7 aus, welche in einer Flachlegung 8 zu einer doppelt flachgelegten Folienbahn 13 zusammengelegt wird.

Die doppelt flachgelegte Folienbahn 13 wird von einem Abzugswalzenpaar 9, 10 abgezogen und läuft weiter auf den reversierenden Wendeabzug 4 auf.

Der reversierende Wendeabzug 4 wird von einem Motor (nicht dargestellt) angetrieben und führt eine Reversierbewegung 12 aus.

Hinter dem reversierenden Wendeabzug 4 wird die doppelt flachgelegte Folienbahn 13 der Reckanlage 5 zugeführt, welche die doppelt flachgelegte Folienbahn 13 in diesem Ausführungsbeispiel monoaxial in Maschinenrichtung verstreckt.

Hinter der Reckanlage 5 wird die doppelt flachgelegte Folienbahn 13 dem Wickler 6 zugeführt und dort zu einem Folienwickel aufgewickelt.

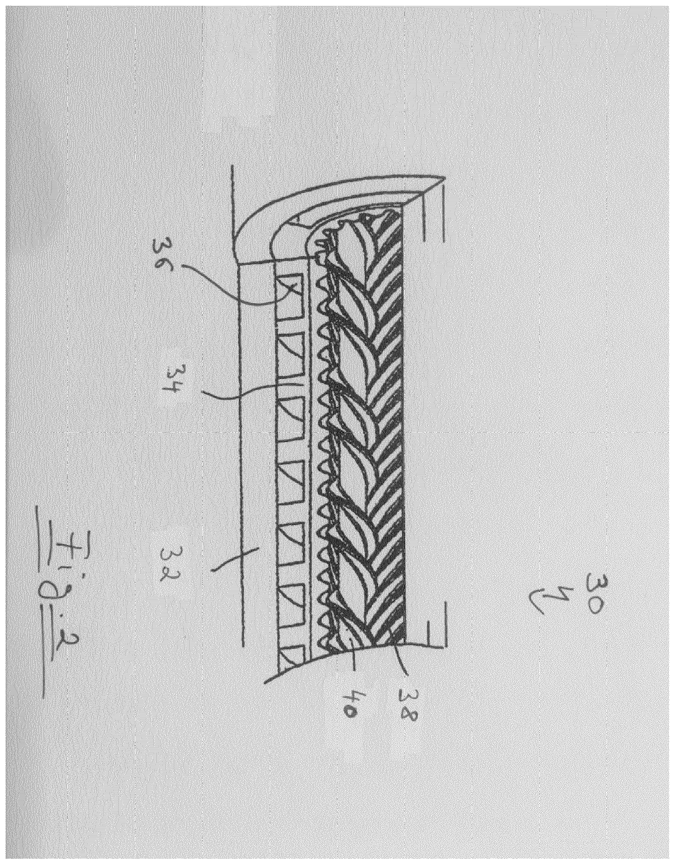

Das Plastifizierungs- und/oder Konditionierungsmittel 30 in Fig. 2 besteht im Wesentlichen aus einer Zentralwelle 38, zumindest einer Planetwalze 40, einer Buchse 34 und einem Gehäuse 32.

Die Buchse 34 weist eine Innenverzahnung (nicht bezeichnet) auf, welche mit der Verzahnung (nicht bezeichnet) der zumindest einen Planetwalze 40 korrespondiert.

Die Planetwalze 40 weist eine Verzahnung (nicht bezeichnet) auf, welche mit der Verzahnung (nicht bezeichnet) der Zentralwelle 38 korrespondiert.

Die zumindest eine Planetwalze 40 kämmt auf ihrer Umlaufbahn (nicht dargestellt) um die Zentralwelle 38 sowohl in die Verzahnung (nicht bezeichnet) der Zentralwelle 38 als auch in die Innenverzahnung (nicht bezeichnet) der Buchse 34.

Sofern die Zentralwelle 38 aktiv oder passiv bewegt wird, so erfährt auch die zumindest eine Planetwalze 40 eine Bewegung (nicht dargestellt).

Das Gehäuse 32 umschließt die Buchse 34 und bildet eine Begrenzung für die in die Buchse 32 eingearbeiteten Kanäle 36. Die Kanäle 36 können für eine Flüssigkeitskühlung des Plastifizierungs- und/oder Konditionierungsmittels 30 genutzt werden.

Der designierte Schmelzestrom (nicht dargestellt) strömt designiert in Maschinenrichtung (nicht dargestellt) betrachtet in axialer Richtung (nicht dargestellt) zu der Zentralwelle 38 und/oder der zumindest einen Planetwalze 40 durch den Hohlraum (nicht bezeichnet) des Plastifizierungs- und/oder Konditionierungsmittels 30, welcher von der Zentralwelle 34, der zumindest einen Planetwalze 40 und der Buchse 34 gebildet wird.

### Bezugszeichenliste

- 1: Blasfolienanlage
- 3: Blaskopf
- 4: reversierender Wendeabzug
- 5: Reckanlage
- 6: Wickler
- 7: Folienblase
- 8: Flachlegung
- 9: Abzugswalze
- 10: Abzugswalze
- 12: Reversierbewegung
- 13: doppelt flachgelegte Folienbahn
- 21: Extruder
- 22: Plastifizierungs- und/oder Konditionierungsmittel
- 30: Plastifizierungs- und/oder Konditionierungsmittel
- 32: Gehäuse
- 34: Buchse
- 36: Kanal
- 38: Zentralwelle
- 40: Planetwalze

## Patentansprüche

1. Blasfolienanlage zum Herstellen einer Folienbahn aus thermoplastischem Kunststoff, wobei die Blasfolienanlage in Maschinenrichtung einen Extruder, einen Blaskopf mit einer Ringschlitzdüse zum Austreten eines Folienschlauchs, eine Flachlegung zum Überführen des Folienschlauchs in die Folienbahn, einen Abzug und einen Wickler aufweist,
***dadurch gekennzeichnet, dass***
die Blasfolienanlage ein Plastifizierungs- und/oder Konditionierungsmittel umfassend eine Zentralwelle und zumindest eine Planetwalze aufweist, vorzugsweise sind die Zentralwelle und/oder die zumindest eine Planetwalze dazu eingerichtet, durch einen Motor angetrieben zu werden.

2. Blasfolienanlage nach Anspruch 1, ***dadurch gekennzeichnet,***
- **dass** die Zentralwelle und/oder die zumindest eine Planetwalze zumindest einen schneckenförmigen Gang aufweisen,
oder.
- **dass** die Zentralwelle und die zumindest eine Planetwalze eine korrespondierende Schrägverzahnung aufweisen.

3. Blasfolienanlage nach einem der vorstehenden Ansprüche, ***dadurch gekennzeichnet,***
- **dass** die Zentralwelle und die zumindest eine Planetwalze mit dem Extruder in einem gemeinsamen Gehäuse angeordnet sind;
oder
- **dass** der Extruder ein erstes Gehäuse aufweist und dass die Zentralwelle und die zumindest eine Planetwalze gemeinsam in einem zweiten Gehäuse angeordnet sind.

4. Blasfolienanlage nach einem der vorstehenden Ansprüche, ***dadurch gekennzeichnet, dass*** das gemeinsame Gehäuse und/oder das zweite Gehäuse eine Innenverzahnung aufweist, insbesondere eine mit einer Verzahnung der zumindest einen Planetwalze korrespondierende Innenverzahnung.

5. Blasfolienanlage nach einem der vorstehenden Ansprüche, ***dadurch gekennzeichnet,***
- **dass** die Zentralwelle temperierbar ausgeführt ist,
und/oder
- **dass** das gemeinsame Gehäuse oder das zweite Gehäuse temperierbar ausgeführt ist,
und/oder
- **dass** die Zentralwelle und/oder das gemeinsame Gehäuse und/oder das zweite Gehäuse eine Flüssigkeitskühlung aufweisen.

6. Blasfolienanlage nach einem der vorstehenden Ansprüche, ***dadurch gekennzeichnet,***
- **dass** das Plastifizierungs- und/oder Konditionierungsmittel eine Zuführung zum Zusetzen eines Additivs aufweist,
und/oder
- **dass** das Plastifizierungs- und/oder Konditionierungsmittel einen Anschluss zum Aufbringen eines Unterdrucks zum Entgasen eines Schmelzestroms aufweist.

7. Blasfolienanlage nach einem der vorstehenden Ansprüche, ***dadurch gekennzeichnet,***
- **dass** das Plastifizierungs- und/oder Konditionierungsmittel einen Anlaufring aufweist,
und/oder
- **dass** das Plastifizierungs- und/oder Konditionierungsmittel einen Stauring aufweist, wobei die Zentralwelle und der Stauring einen Spalt zum Austretenlassen des Schmelzestroms aus dem Plastifizierungs- und/oder Konditionierungsmittel ausformen.

8. Blasfolienanlage nach einem der vorstehenden Ansprüche, ***dadurch gekennzeichnet,***
- **dass** es sich bei dem Plastifizierungs- und Konditionierungsmittel um einen Planetwalzenextruder handelt,
und/oder
- **dass** die Blasfolienanlage eine Mehrzahl von Extrudern aufweist, wobei jeder Extruder einen separaten Schmelzestrom designiert bereitstellen kann und wobei zumindest ein Schmelzestrom in Maschinenrichtung designiert ein Plastifizierungs- und/oder Konditionierungsmittel umfassend eine Zentralwelle und zumindest eine Planetwalze durchströmt.

9. Blasfolienanlage nach einem der vorstehenden Ansprüche, **dadurch gekennzeichnet, dass** der Schmelzestrom unter einem Schmelzdruck von der Ringschlitzdüse zu dem Folienschlauch ausgeformt wird.

10. Blasfolienanlage nach Anspruch 9, **dadurch gekennzeichnet, dass** die Blasfolienanlage dazu ausgestaltet ist, eine Temperatur des Schmelzestroms in der Ringschlitzdüse mittels einer Steuerung so abzusenken, dass eine höhere Produktionskapazität, insbesondere eine um mehr als 20% höhere Produktionskapazität, der Blasfolienanlage erreicht werden kann,
bevorzugt ist die Steuerung dazu ausgestaltet, zum Absenken der Temperatur mittels eines stetigen Vergleichs zwischen der Messgröße Temperatur und einer Vorgabe für die Temperatur des Schmelzestroms eine Reduzierung eines Energieeintrags in den Schmelzestrom oder Erhöhung des Energieaustrags aus dem Schmelzestrom im Plastifizierungs- und/oder Konditioniermittel durchzuführen, besonders bevorzugt ist die Steuerung dazu ausgestaltet, einen Regelkreis bereitzustellen, bei dem eine Einhaltung einer baubedingten Druckobergrenze dadurch bewerkstelligt wird, dass bei Erreichen einer Druckobergrenze der Energieaustrag nicht weiter gesteigert oder der Energieeintrag weiter reduziert wird.

11. Herstellverfahren für eine Folienbahn aus einem thermoplastischen Kunststoff mittels einer Blasfolienanlage aufweisend ein Plastifizierungs- und/oder Konditionierungsmittel umfassend eine Zentralwelle und zumindest eine Planetwalze gemäß einem der Ansprüche 1 bis 10.

12. Herstellverfahren nach Anspruch 11, ***dadurch gekennzeichnet, dass*** ein Schmelzestrom mittels des Plastifizierungs- und/oder Konditionierungsmittels temperiert wird,
vorzugsweise wird dabei die Temperatur des Schmelzestroms mittels einer Steuerung gesteuert und/oder geregelt, wobei mittels eines stetigen Vergleichs zwischen der Messgröße Temperatur und einer Vorgabe für die Temperatur des Schmelzestroms eine Reduzierung eines Energieeintrags in den Schmelzestrom oder Erhöhung des Energieaustrags aus dem Schmelzestrom im Plastifizierungs-und/oder Konditioniermittel durchgeführt wird,
bevorzugt bewerkstelligt die Steuerung mittels eines Regelkreis eine Einhaltung einer baubedingten Druckobergrenze, indem bei Erreichen einer Druckobergrenze der Energieaustrag nicht weiter gesteigert oder der Energieeintrag weiter reduziert wird

13. Herstellverfahren nach einem der Ansprüche 11 oder 12, ***dadurch gekennzeichnet,***
- **dass** einem Schmelzestrom in Maschinenrichtung vor oder in dem Plastifizierungs- und/oder Konditionierungsmittel ein Additiv zugesetzt wird.
und/oder
- **dass** ein Schmelzestrom mittels des Plastifizierungs- und/oder Konditionierungsmittels entgast wird,
und/oder
- **dass** ein Ausgangsmaterial für einen Schmelzestrom und/oder ein Additiv ein Metallocen aufweist.

14. Folienbahn aus thermoplastischem Kunststoff, wobei die Folienbahn mit einer Blasfolienanlage nach einem der Ansprüche 1 bis 10 und/oder gemäß einem Herstellverfahren nach einem der Ansprüche 11 bis 13 hergestellt worden ist.

15. Umrüstverfahren zum Umrüsten einer herkömmlichen Blasfolienanlage zu einer Blasfolienanlage aufweisend ein Plastifizierungs- und/oder Konditionierungsmittel umfassend eine Zentralwelle und zumindest eine Planetwalze gemäß einem der Ansprüche 1 bis 10,
vorzugsweise wird dabei:
- in Maschinenrichtung zwischen einem Extruder und einem Blaskopf einer herkömmlichen Blasfolienanlage ein Plastifizierungs- und/oder Konditionierungsmittel umfassend eine Zentralwelle und zumindest eine Planetwalze eingerüstet, insbesondere ein Planetwalzenextruder.
oder
- ein Extruder einer herkömmlichen Blasfolienanlage gegen einen Extruder aufweisend ein Plastifizierungs- und/oder Konditionierungsmittel umfassend eine Zentralwelle und zumindest eine Planetwalze ausgetauscht, insbesondere gegen einen Planetwalzenextruder.
oder
- ein Extruder einer herkömmlichen Blasfolienanlage zu einem Extruder aufweisend ein Plastifizierungs- und/oder Konditionierungsmittel umfassend eine Zentralwelle und zumindest eine Planetwalze umgerüstet.
